# EUROPÄISCHE PATENTANMELDUNG

(11) **EP 1 322 105 A1**
(43) Veröffentlichungstag der Anmeldung: **25.06.2003**
(21) Anmeldenummer: 01130028.2
(22) Anmeldetag: 18.12.2001
(51) Int. Cl.: H04N 1/19, H04N 3/15, B41J 2/465

(54) **Vorrichtung und Verfahren zum Erfassen eines hochaufgelösten Bildes in einer Bildebene**

(71) Anmelder: Agfa-Gevaert AG, 51373 Leverkusen (DE)
(72) Erfinder: Müller, Peter, 86415 Mering (DE); Musewald, Christian, 81545 München (DE)

(57) **Zusammenfassung**

Die Erfindung betrifft eine Vorrichtung und ein Verfahren zum Erfassen eines hochaufgelösten Bildes in einer Bildebene (13) mit den Schritten Erzeugen wenigstens eines Strahlenbündels durch eine Belichtungsvorrichtung (1; 16), partielles Modulieren der Intensität des Strahlenbündels durch eine Modulatorvorrichtung (17) zwischen der Belichtungsvorrichtung (1; 16) und der Bildebene (13), Aufnehmen des Bildes in der Bildebene (13) durch einen Bildempfänger (14), wobei die Modulatorvorrichtung (17) und/oder der Bildempfänger (14) eine vorgegebene Anzahl von diskreten Elementen (15; 18) aufweist.

Um auf eine einfache und kostengünstige Art einen schnellen Pixelversatz zu ermöglichen, wird die Ausbreitungsrichtung des von der Belichtungsvorrichtung (1; 16) erzeugten Strahlenbündels zum Einstellen der Winkel (α, β) zwischen dem jeweiligen diskreten Element (15; 18) bzw. dem jeweiligen transparenten Bereich (7) und einem Teilbündel (8) des Strahlenbündels verändert, so dass ein Teil des Teilbündels (8) ausgeblendet wird, und wird wenigstens ein erstes Teilbild bei einem ersten Winkel (α) und ein zweites Teilbild bei einem zweiten Winkel (β) des jeweiligen Teilbündels auf der Bildebene (13) erfasst.

## Beschreibung

Die Erfindung betrifft eine Vorrichtung und ein Verfahren zum Erfassen eines hochaufgelösten Bildes in einer Bildebene gemäß dem Oberbegriff von Anspruch 1 bzw. dem Oberbegriff von Anspruch 11.

Bei der Abbildung eines Gegenstandes auf ein lichtempfindliches Material ist man bestrebt, die räumliche Auflösung des Bildes zu maximieren. Dies ist insbesondere dann von Bedeutung, wenn die bildgebende oder aufzeichnende Vorrichtung elektronisch arbeitet. Bei den elektronischen bildgebenden oder aufzeichnenden Vorrichtungen werden der Gegenstand oder das Bild aus Anzeige- oder Bildelementen (Pixel) zusammengesetzt, wobei die Anzeige- oder Bildelemente einzeln elektronisch ansteuerbar bzw. auslesbar sind. Diese Anzeige- oder Bildelemente haben bei vertretbaren Kosten jedoch eine Pixelanzahl, die für Abbildungen hoch aufgelöster Bilder in fotografischer Qualität nicht ausreichend ist. Will man daher beispielsweise die Darstellung auf einer LCD- (liquid crystal device), einer DMD-(digital mirror device) Anzeigevorrichtung oder einem sonstigen Lichtmodulator auf ein lichtempfindliches Material wie Fotopapier abbilden, wird bei den bekannten Verfahren die Auflösung mittels sequenzieller Abbildung erhöht. Um die Auflösung beispielsweise zu vervierfachen wird mit jedem Pixel des Anzeige- oder Bildelement nur ein Viertel des von diesem Pixel zu erfassenden Bereichs des Gegenstandes abgebildet, die anderen drei Viertel werden mit einer Maske abgedeckt. In einer zweiten Abbildung wird die Maske so verschoben, dass ein zweites Viertel des zu erfassenden Bereichs abzubilden ist, usw. Nach vier Abbildungen jeweils eines Viertels ergibt sich das Abbild des gesamten Gegenstandes in vierfacher Auflösung.

Adäquat wird ein (photographischer) Film durch eine mit einer Maske teilweise bedeckte CCD- (charge coupled device) Vorrichtung ausgelesen, indem eine erste Abbildung des Films durch die CCD-Vorrichtung erfasst wird, anschließend die CCD-Vorrichtung mit der Maske gegenüber dem Film versetzt wird und eine zweite Abbildung des Films erfasst wird, usw.

Bei dem zweidimensionalen Bilddetektor nach DE 43 27 944 mit einer Sensoranordnung, die eine Vielzahl in Matrixform angeordneter Bildelemente aufweist, einer gegenüber der zum Nachweis dienenden Fläche der Sensoranordnung angebrachten Maske, die mit Fenstern versehen ist, die jeweils kleiner sind als die einzelnen Bildelemente, sowie einer Einrichtung zum Verändern der Positionen der Fenster, werden die Positionen der Fenster um Schritte verändert, die kleiner sind als die Abstände zwischen den Bildelementen.

Ein Nachteil bei diesem Stand der Technik besteht darin, dass die Maske sehr nahe an dem entsprechenden Element angeordnet sein muss, um dieselbe Schärfenebene bei Belichtung zu haben. Eine solche, sehr nahe an dem Element angeordnete Maske lässt sich aber nur schwer realisieren.

Bei dem Verfahren nach JP 8- 227 108 wird ein mit einer Maske abgedeckter Lichtmodulator zwischen aufeinanderfolgenden Belichtungssequenzen versetzt.

Der Nachteil dieses Verfahrens besteht darin, dass die Verschiebung des relativ schweren Lichtmodulators aufwändig ist die Funktionsfähigkeit des Lichtmodulators beeinträchtigt und praktisch nur z.B. mit relativ teuren Piezo- Elementen durchführbar ist.

Bei dem Auslesen eines Bildes bei Bewegung einer Bildgebervorrichtung nach US 5 877 805 wird eine CCD-Vorrichtung zwischen den Aufnahmesequenzen versetzt, so dass eine Aufnahmeposition entlang einem geschlossenen Pfad verändert wird, so dass sie nach n Bildaufnahmen zum Ausgangsort zurückkehrt. Die Aufnahmeposition wird verändert, nachdem die abgespeicherten Ladungen jeder der n Bildaufnahmen an eine Übertragungsstufe übertragen wurden und Signalladungen in einer photoelektrischen Wandlerstufe spätestens am Ende der Änderung der Aufnahmeposition entladen sind, so dass äußere Signalladungen, die während der Änderung der Aufnahmeposition gesammelt wurden, entladen sind.

Auch hier ist erheblicher Aufwand erforderlich, um die Bildgebervorrichtung samt Elektronikanschlüssen versetzen zu können.

Bei dem Verfahren des Übertragens eines digitalen Bildes für seine Wiedergabe oder seine Abspeicherung und der entsprechenden Vorrichtung nach EP 0 987 875 wird ein auf einer LCD-Vorrichtung dargestelltes Bild auf einen Träger abgebildet; anschließend wird die Abbildung jedes LCD- Elements durch ein optisches Element lateral in der Projektionsebene versetzt. Dies wird bei jeder Verschiebung ein- oder mehrmals durchgeführt.

Ein Nachteil bei diesem Stand der Technik besteht darin, dass das optische Element die Helligkeit reduziert. Das bedeutet, dass die Belichtung stärker ausfallen muss, damit eine schnelle Abbildung gewährleistet bleibt. Dies wiederum führt zu stärkerer Erwärmung, was besonders bei LCD-Elementen nachteilig ist.

Aufgabe der vorliegenden Erfindung ist es, auf eine einfache und kostengünstige Art einen schnellen Pixelversatz zu ermöglichen.

Die Aufgabe wird erfindungsgemäß gelöst durch eine Vorrichtung und ein Verfahren zum Erfassen eines hochaufgelösten Bildes nach Anspruch 1 bzw. Anspruch 11. Bevorzugte Ausführungsformen der Erfindung sind Gegenstand der jeweiligen Unteransprüche.

Der Erfindung liegt die Idee zugrunde, den Versatz von Gegenstand gegenüber Bild durch Versetzen des Beleuchtungsstrahlengangs zu bewirken. Dies kann durch mehrere schaltbare Lichtquellen, durch eine einzelne, verschiebbare Lichtquelle oder durch ein optisches Element zum Versatz des Beleuchtungsstrahlengangs erfolgen.

Die erfindungsgemäße Vorrichtung zum Erfassen eines hochaufgelösten Bildes in einer Bildebene mit einer Belichtungsvorrichtung zum Erzeugen wenigstens eines Strahlenbündels, einer Modulatorvorrichtung zum partiellen Modulieren der Intensität des Strahlenbündels von der Belichtungsvorrichtung, wobei die Modulatorvorrichtung zwischen der Belichtungsvorrichtung und der Bildebene angeordnet ist, einem Bildempfänger zum Aufnehmen des Bildes in der Bildebene, wobei die Modulatorvorrichtung und/oder der Bildempfänger eine vorgegebene Anzahl von diskreten Elementen aufweist, und einer opaken Blendenvorrichtung, die zwischen der Belichtungsvorrichtung und der Bildebene angeordnet ist und die zum Formen von Teilbündeln aus dem wenigstens einen Strahlenbündel von der Belichtungsvorrichtung mehrere transparente Bereiche aufweist, die jeweils einem der diskreten Elemente der Modulatorvorrichtung und/oder des Bildempfängers zugeordnet sind, wobei der Querschnitt eines Teilbündels auf dem Bildempfänger durch die geometrische Ausdehnung des jeweiligen diskreten Elementes, die geometrische Ausdehnung des jeweiligen transparenten Bereiches und die Winkel zwischen ihnen und dem Teilbündel definiert ist, ist dadurch gekennzeichnet, dass die Ausbreitungsrichtung des von der Belichtungsvorrichtung erzeugten Strahlenbündels veränderbar ist, so dass die Winkel zwischen dem jeweiligen diskreten Element bzw. dem jeweiligen transparenten Bereich und dem Teilbündel einstellbar sind und je nach Winkel ein Teil des Teilbündels ausgeblendet wird.

Der Begriff "partielles Modulieren der Intensität" bedeutet hier und im folgenden, dass die Lichtintensität in bestimmten Teilen des Querschnitts des Strahlenbündels von der Belichtungsvorrichtung selektiv verändert wird.

Insbesondere umfasst die Belichtungsvorrichtung zum Erzeugen wenigstens eines Strahlenbündels wenigstens eine erste und eine zweite Lichtquelle, die unabhängig voneinander ansteuerbar sind, so dass das wenigstens eine Strahlenbündel unter einem ersten bzw. unter einem zweiten Winkel aus der Belichtungsvorrichtung austritt.

Alternativ umfasst die Belichtungsvorrichtung wenigstens eine Lichtquelle, die verschiebbar ist, so dass das wenigstens eine Strahlenbündel unter einem veränderlichen Winkel aus der Belichtungsvorrichtung austritt.

In einer weiteren alternativen Ausführungsform umfasst die Belichtungsvorrichtung wenigstens eine Lichtquelle und ein im Strahlengang angeordnetes lichtbrechendes optisches Element, das bewegbar ist, so dass das wenigstens eine Strahlenbündel unter einem veränderlichen Winkel aus der Belichtungsvorrichtung austritt.

Die Erfindung ist anwendbar auf eine Bildgebungseinrichtung. Bei einer Bildgebungseinrichtung ist die Modulatorvorrichtung zwischen der Belichtungsvorrichtung und der Bildebene angeordnet und umfasst vorzugsweise eine vorgegebene Anzahl von diskreten, elektronisch ansteuerbaren Modulatorelementen, wobei die geometrische Ausdehnung jedes der Modulatorelemente im wesentlichen dem Querschnitt jedes der Teilbündel in Höhe der Modulatorvorrichtung entspricht.

Bei einer erfindungsgemäßen Bildgebungseinrichtung sind insbesondere die elektronisch steuerbaren Modulatorelemente Spiegel, deren Stellung in Bezug auf die Bildebene veränderbar ist.

Alternativ können bei einer erfindungsgemäßen Bildgebungseinrichtung die elektronisch steuerbaren Modulatorelemente LCD-Zellen sein, deren Transmissivität oder Reflexivität veränderbar ist.

Die Erfindung ist außerdem anwendbar auf Bildspeichereinrichtungen. Dazu weist der Bildempfänger lichtempfindliche Flächen auf, die matrixförmig in wenigstens einer Empfängerzeile angeordnet sind und die elektronisch ausgelesen werden, wobei die geometrische Ausdehnung einer der Flächen im wesentlichen dem Querschnitt des jeweiligen Teilbündels in Höhe des Bildempfängers entspricht.

Alternativ kann bei einer erfindungsgemäßen Bildspeichereinrichtung der Bildempfänger eine fotochemisch veränderbare Schicht sein.

Vorzugsweise wirken bei den genannten Ausführungsformen wenigstens einige der transparenten Bereiche als optische Linse.

Das entsprechende Verfahren zum Erfassen eines hochaufgelösten Bildes in einer Bildebene mit einer erfindungsgemäßen Vorrichtung ist gekennzeichnet durch die Schritte Verändern der Ausbreitungsrichtung des von der Belichtungsvorrichtung erzeugten Strahlenbündels zum Einstellen der Winkel zwischen dem jeweiligen diskreten Element bzw. dem jeweiligen transparenten Bereich und dem Teilbündel, so dass ein Teil des Teilbündels ausgeblendet wird, und Erfassen wenigstens eines ersten Teilbildes bei einem ersten Winkel und eines zweiten Teilbildes bei einem zweiten Winkel des jeweiligen Teilbündels auf der Bildebene.

Bei einer ersten bevorzugten Ausführungsform werden wenigstens eine erste und eine zweite Lichtquelle der Belichtungsvorrichtung zum Erzeugen wenigstens eines Strahlenbündels unabhängig voneinander angesteuert, so dass das wenigstens eine Strahlenbündel unter einem ersten bzw. unter einem zweiten Winkel aus der Belichtungsvorrichtung austritt.

Alternativ wird wenigstens eine Lichtquelle der Belichtungsvorrichtung verschoben, so dass das wenigstens eine Strahlenbündel unter einem veränderlichen Winkel aus der Belichtungsvorrichtung austritt.

Bei einer weiteren alternativen Ausführungsform wird ein im Strahlengang angeordnetes lichtbrechendes optisches Element in der Belichtungsvorrichtung bewegt, so dass das wenigstens eine Strahlenbündel unter einem veränderlichen Winkel aus der Belichtungsvorrichtung austritt.

Ein Vorteil der Erfindung ist es, dass sie kostengünstig zu implementieren ist und in einer besonders bevorzugten Ausführungsform keine mechanisch beweglichen Teile benötigt. Dadurch kann sie bei sehr zeitkritischen Anwendungen eingesetzt werden, außerdem kommt es zu keinem Verschleiß.

Weitere Merkmale und Vorteile der Erfindung ergeben sich aus der folgenden Beschreibung von bevorzugten Ausführungsformen.

Fig. 1 zeigt eine erste Ausführungsform der Erfindung in einer CCD- Ausleseeinrichtung.

Fig. 2 zeigt eine weitere Ausführungsform der Erfindung in einer LCD- Anzeigeeinrichtung für die Belichtung einer Photoschicht.

Fig. 3 zeigt eine Ausführungsform der erfindungsgemäßen Belichtungsvorrichtung.

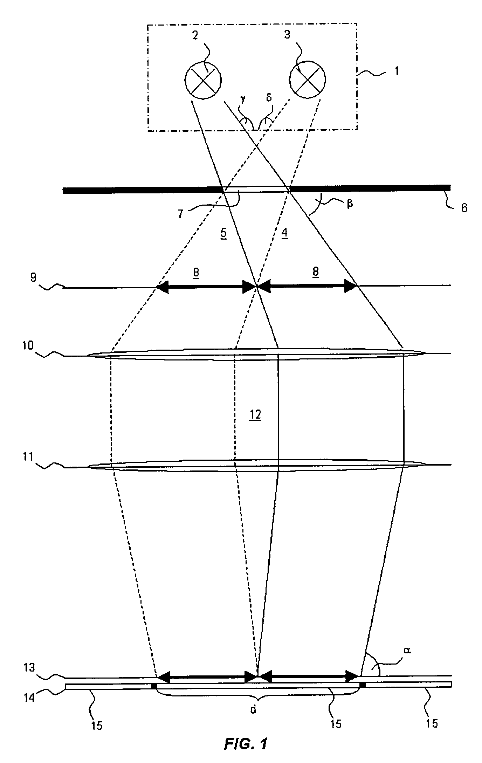

In Fig. 1 ist eine Einrichtung dargestellt, die zum Auslesen eines Films mittels CCD-Array dient. Dabei ist allgemein die zum Auslesen eines Films benötigte Auflösung höher als die Auflösung des CCD-Arrays. Um diesen Unterschied in der Auflösung zu kompensieren, weist die erfindungsgemäße Einrichtung in der gezeigten Ausführung wenigstens zwei Lichtquellen 2 und 3 in einer Belichtungsvorrichtung 1 auf.

Licht von den beiden Lichtquellen 2 und 3 in der Belichtungsvorrichtung 1 trifft in Form jeweils eines Strahls 4 bzw. 5 auf eine Blendenvorrichtung 6, die gitterähnlich aufgebaut ist und undurchsichtige Stege und transparente Bereiche 7 aufweist. In Fig. 1 ist an den beiden Strahlenbündeln 4 und 5 exemplarisch ein erster und ein zweiter Winkel γ bzw. δ gezeigt, unter dem die Strahlenbündel 4 bzw. 5 aus der Belichtungsvorrichtung 1 austreten. Licht von der ersten Lichtquelle 2 ist durch durchgezogenen Begrenzungslinien dargestellt, Licht von der zweiten Lichtquelle 3 ist durch gestrichelte Begrenzungslinien dargestellt.

Durch die Blendenvorrichtung 6 werden die Strahlenbündel 4 und 5 je nach Einfallswinkel der Strahlenbündel in Teilbündel geformt. Mit anderen Worten: Durch die opake Blendenvorrichtung 6 wird je nach Einfallsrichtung des Lichtes begrenzte Strahlenbündel durchgelassen. Da sich der Einfallswinkel des Lichtes ändert, wenn das Licht von der zweiten Lichtquelle 3 anstelle von der ersten Lichtquelle 2 abgestrahlt wird, unterscheiden sich so die Teilbündel 8 hinter der Blendenvorrichtung 6 entsprechend.

Hinter der Blendenvorrichtung 6 ist ein Film 9 angeordnet, dessen Information erfasst werden soll. Durch den Film 9 wird die Intensität des Strahlenbündels von der Belichtungsvorrichtung 1 partiell moduliert. Der Film 9 wird von unterschiedlichen Teilbündeln 8 und damit unter unterschiedlichen Winkeln β belichtet, je nachdem von welcher der beiden Lichtquellen 2 und 3 das Licht abgestrahlt wurde.

Zu Erläuterung ist in der Blendenvorrichtung 6 ein transparenter Bereich 7 dargestellt. In der Filmebene sind unter dem transparenten Bereich 7 zwei Doppelpfeile nebeneinander gezeigt. An den Spitzen der Doppelpfeile enden Begrenzungslinien der Lichtstrahlen von der Lichtquelle 2 bzw. 3 auf die Filmebene 9.

Durch den Lichtstrahl 4 von der Lichtquelle 2, der durch den transparenten Bereich 7 der Blendenvorrichtung 6 tritt, wird ein Bereich zwischen der rechten Spitze des rechten Doppelpfeils und der linken Spitze des rechten Doppelpfeils belichtet. Das Licht von dem Bereich zwischen diesen Spitzen wird von einer ersten Linse 10 aufgefangen und durch eine weitere Linse 11 fokussiert. Zwischen den Linsen breitet sich das Licht entlang einem Strahlengang 12 aus. Dieser optische Aufbau ist jedoch nur ein Beispiel, selbstverständlich können weitere optischen Elemente zwischen den beiden Linsen 10 und 11 vorgesehen sein. Durch die Linse 11 wird das Licht von dem Bereich auf der Filmebene 9 auf eine Bildebene 13 abgebildet. In der Bildebene 13 ist ein Bildempfänger 14 angeordnet, der mehrere lichtempfindliche Flächen 15 aufweist, die eine laterale Ausdehnung d haben. (In Fig. 1 ist der Bildempfänger der Übersichtlichkeit halber etwas unterhalb der Bildebene 13 dargestellt.)

Entsprechend wird hinter dem transparenten Bereich 7 der Blendenvorrichtung 6 durch die zweite Lichtquelle 3 ein Bereich zwischen der rechten Spitze des linken Doppelpfeils und der linken Spitze des linken Doppelpfeils auf der Filmebene 9 belichtet. Dabei sind Größe und Lage des Bereichs durch einen Abstand zwischen der Blendenvorrichtung 6 und der Filmebene 9 sowie durch einen Winkel β gegeben, unter dem das Licht durch die Blendenvorrichtung 6 tritt. Auch dieses Licht wird von der Linse 10 aufgefangen und durch die Linse 11 auf die Bildebene 13 abgebildet.

Das Ergebnis dieser doppelten Abbildung ist ein Gewinn an räumlicher Auflösung: während durch die erste Belichtung, d.h. die Belichtung durch die erste Lichtquelle 2 der Bereich zwischen der linken Spitze des rechten Doppelpfeils bis zur rechten Spitze des rechten Doppelpfeils abgebildet wird, wird durch die Belichtung durch die zweite Lichtquelle 3 der Bereich zwischen der linken Spitze des linken Doppelpfeils und der rechten Spitze des linken Doppelpfeils abgebildet. In Fig. 1 füllt die Abbildung durch die erste Lichtquelle 2 die rechte Hälfte des Elements 15 des Empfängers 14. Die Abbildung durch die zweite Lichtquelle 3 füllt die linke Hälfte des Elements 15.

Es werden nach jeder Belichtung durch die erste Lichtquelle 2 und nach Belichtung durch die zweite Lichtquelle 3 die CCD- Elemente des Bildempfängers 14 ausgelesen und für die spätere Weiterverarbeitung zwischengespeichert. Dies bedeutet die Beleuchtung des Films und das sequenzielle Auslesen der CCD-Pixel beim Scannen.

Die Reihenfolge der Elemente in Richtung der Lichtausbreitung gesehen ist selbstverständlich nicht auf die gezeigte Darstellung eingeschränkt. So kann die Position der Blendenvorrichtung 6 und des Films 9 ausgetauscht werden.

Der Vorteil der Ausführungsform nach Fig. 1 besteht darin, dass bei zwei unabhängig voneinander ansteuerbaren Lichtquellen 2 und 3 keine mechanisch beweglichen Teile vorgesehen werden müssen und daher kein mechanischer Verschleiß auftritt oder Justage und Wartung notwendig werden.

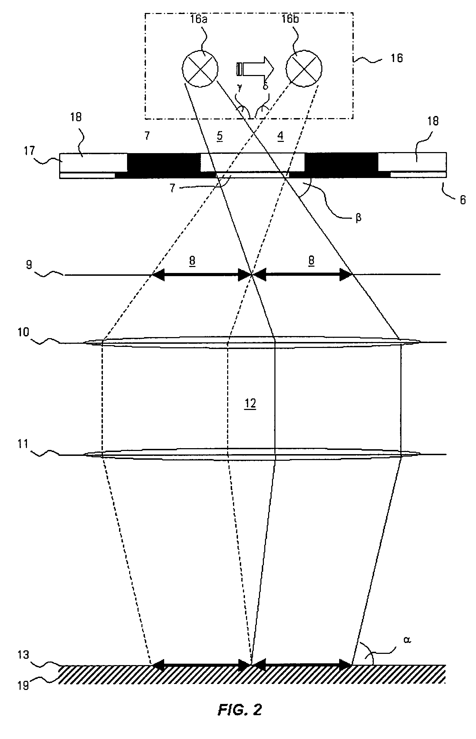

In Fig. 2 ist eine Ausführungsform der Erfindung für das Speichern einer Darstellung auf einer LCD- Anzeigevorrichtung auf einer photographischen Schicht gezeigt. In einer Beleuchtungsvorrichtung 16 ist eine bewegliche Lichtquelle 16 angeordnet, die kontinuierlich zwischen wenigstens zwei Positionen 16a und 16b bewegt werden kann. Die Bewegung ist durch einen Blockpfeil angedeutet, das Licht von der Lichtquelle 16 an der ersten Position 16a ist durch durchgezogene Linien, das Licht von der Lichtquelle 16 an der zweiten Position 16b ist durch gestrichelte Linien dargestellt. Im übrigen weist diese Ausführungsform wie die in Fig. 1 eine Abbildungsoptik mit einer ersten Linse 10 und einer zweiten Linse 11 auf, mit der ein Bild auf der Bildebene 13 erzeugt wird. In der Ausführungsform nach Fig. 2 wird das Bild in der Bildebene 13 von einer photochemischen Schicht 19 erfasst, die sich vorzugsweise auf einem (nicht dargestellten) Papier befindet.

Die Ebene 9 ist eine Zwischenabbildungsebene, in der ein Zwischenabbild erzeugt wird, das durch die genannte Abbildungsoptik abgebildet wird.

Oberhalb der Blendenvorrichtung 6 mit den transparenten Bereichen 7 ist bei dieser Ausführungsform eine Modulatorvorrichtung 17 angeordnet, die Modulatorelemente 18 umfasst, welche einzeln elektrisch ansteuerbar sind, so dass sie transparent oder opak sind. Durch die Modulatorvorrichtung 17 wird die Intensität des Strahlenbündels von der Belichtungsvorrichtung 16 partiell moduliert. So lässt sich mit einer Vielzahl von Modulatorelementen 18 ein Gegenstand bildlich darstellen. Wie bereits erwähnt ist jedoch die räumliche Auflösung derartiger Modulatorelemente 18 begrenzt. Zur Erläuterung sind in der Zwischenabbildungsebene 9 wieder Doppelpfeile gezeigt. Analog zu der Darstellung in Fig. 1 wird durch die Lichtquelle 16 an ihrer ersten Position 16a der Bereich zwischen der linken Spitze des rechten Doppelpfeils und der rechten Spitze des rechten Doppelpfeils belichtet. "Komplementär" dazu wird durch die Lichtquelle 16 an ihrer zweiten Position 16b ein Bereich zwischen der linken Spitze des linken Doppelpfeils und der rechten Spitze des linken Doppelpfeils belichtet.

Das Ergebnis dieser Doppelbelichtung der LCD- Anzeigevorrichtung ist wieder ein Gewinn an räumlicher Auflösung. Durch beide Einzelbelichtungen wird nur jeweils ein Teil der Information der Anzeige auf der LCD- Anzeigevorrichtung abgebildet.

Mit beiden Ausführungsformen nach Fig. 1 und Fig. 2 lassen sich so eine höhere räumliche Auflösung bei der Abbildung und Erfassung von Abbildungen erzielen. Sowohl in Fig. 1 als auch in Fig. 2 weisen die Modulatorvorrichtung 17 als auch der Bildempfänger 14 eine vorgegebene Anzahl von diskreten Elementen 15 bzw. 18 auf, die nur eine begrenzte Auflösung zulassen. Diese Begrenzung wird erfindungsgemäß überwunden, indem eine Doppelbelichtung mit verschiedenen Lichtstrahlbündeln 4 und 5 erfolgt. Der Vorteil der Ausführungsform nach Fig. 2 besteht darin, dass der Winkel, unter dem die Belichtung erfolgt, variiert werden kann, indem der Abstand zwischen der ersten Position und der zweiten Position verändert wird.

In beiden obigen Ausführungsformen weist die opake Blendenvorrichtung 6 zwischen der Belichtungsvorrichtung 1 bzw. 16 und der Bildebene 13 zum Formen von Teilbündeln 8 aus den Strahlenbündeln 4 und 5 mehrere transparente Bereiche 7 auf, die jeweils einem der diskreten Elemente 18 der Modulatorvorrichtung 17 bzw. einer der lichtempfindlichen Flächen 15 des Bildempfängers 14 zugeordnet sind. Der Querschnitt eines Teilbündels 8 auf dem Bildempfänger 14 ist durch die geometrische Ausdehnung der lichtempfindlichen Fläche 15, die geometrische Ausdehnung des transparenten Bereiches 7 und die Winkel α und β zwischen ihnen und dem Teilbündel 8 definiert. Der wirksame Querschnitt eines Teilbündels 8 auf der Modulatorvorrichtung 17 ist durch die geometrische Ausdehnung des jeweiligen Modulatorelements 18, die geometrische Ausdehnung des jeweiligen transparenten Bereiches 7 und die Winkel α und β zwischen ihnen und dem Teilbündel 8 definiert. Durch Änderung der Ausbreitungsrichtung des von der Belichtungsvorrichtung 1 bzw. 16 erzeugten Strahlenbündels sind die Winkel α und β zwischen der jeweiligen lichtempfindlichen Fläche 15 bzw. dem jeweiligen Modulatorelement 18, dem jeweiligen transparenten Bereich 7 und dem Teilbündel 8 einstellbar.

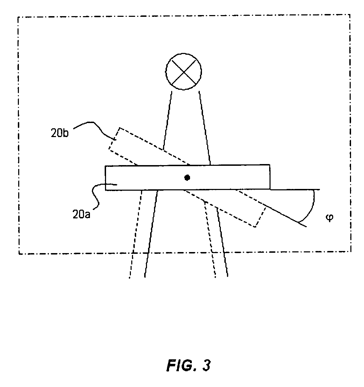

Eine weitere Art der Erzeugung von Lichtstrahlen mit unterschiedlicher Ausbreitungsrichtung ist in Fig. 3 gezeigt. Bei dieser Ausführungsform umfasst die Beleuchtungsvorrichtung nur eine Lichtquelle, vor der jedoch ein drehbares optisches Element 20 angeordnet ist. In Fig. 3 ist dieses optische Element 20 sehr einfach aufgebaut und benötigt daher keinerlei Justage oder Wartung. Das optische Element 20 ist eine dickere Glaspatte. Wird die Glasplatte 20 aus ihrer Ruhestellung 20a, die mit durchgezogenen Linien dargestellt ist, um einen Winkel ϕ in eine schräge Stellung 20b gekippt, die gestrichelt dargestellt ist, so erfährt das durch die Glasplatte 20 tretende Licht einen Parallelversatz. Das Licht bei Ruhestellung der Platte 20 ist mit durchgezogenen Linien gezeigt, das parallel versetzte Licht ist gestrichelt gezeigt.

Wenn die Beleuchtungsvorrichtung nach Fig. 3 bei der Ausführungsform nach Fig. 2 anstelle der Beleuchtungsvorrichtung 16 eingesetzt wird, so kann sie so angeordnet werden, dass sie einen relativ großen Abstand von der Modulatorvorrichtung 17 hat. Dadurch kommt es nicht zu einer thermischen Beeinflussung der Modulatorvorrichtung 17, und die Probleme beim Stand der Technik treten nicht auf.

Die Erfindung ist nicht auf die dargestellten Ausführungsformen beschränkt. So kann sie beispielsweise dadurch erweitert werden, dass wenigstens einige der transparenten Bereiche 7 der Blendenvorrichtung 6 als optische Linse wirken.

### Bezugszeichen

- 1: Belichtungsvorrichtung
- 2: erste Lichtquelle
- 3: zweite Lichtquelle
- 4: erstes Strahlenbündel
- 5: zweites Strahlenbündel
- 6: opake Blendenvorrichtung
- 7: transparente Blendenbereiche
- 8: Teilbündel
- 9: Filmebene bzw. Zwischenabbildungsebene
- 10: erste Linse
- 11: zweite Linse
- 12: Strahlengang zwischen Linsen
- 13: Bildebene
- 14: Bildempfänger mit einer Empfängerzeile
- 15: lichtempfindliche Fläche
- 16: verschiebbare Lichtquelle, 16a erste Position, 16b zweite Position
- 17: Modulatorvorrichtung
- 18: diskretes, elektronisch ansteuerbares Modulatorelement: LCD- Zelle, deren Transmissivität veränderbar ist
- 19: Papier mit photochemischer Beschichtung
- 20: im Strahlengang angeordnetes, lichtbrechendes optisches Element, 20a erste Stellung, 20b zweite Stellung
- α: Winkel zwischen Bildempfängerelement und Teilbündel
- β: Winkel zwischen transparentem Bereich und Teilbündel
- ϕ: veränderlicher Winkel
- d: geometrische Ausdehnung einer der lichtempfindlichen Flächen

## Patentansprüche

1. Vorrichtung zum Erfassen eines hochaufgelösten Bildes in einer Bildebene (13) mit einer Belichtungsvorrichtung (1; 16) zum Erzeugen wenigstens eines Strahlenbündels (4, 5), einer Modulatorvorrichtung (9; 17) zum partiellen Modulieren der Intensität des Strahlenbündels von der Belichtungsvorrichtung (1; 16), wobei die Modulatorvorrichtung (9; 17) zwischen der Belichtungsvorrichtung (1; 16) und der Bildebene (13) angeordnet ist, einem Bildempfänger (14) zum Aufnehmen des Bildes in der Bildebene (13), wobei die Modulatorvorrichtung (9; 17) und/oder der Bildempfänger (14) eine vorgegebene Anzahl von diskreten Elementen (15; 18) aufweist, und einer opaken Blendenvorrichtung (6), die zwischen der Belichtungsvorrichtung (1; 16) und der Bildebene (13) angeordnet ist und die zum Formen von Teilbündeln (8) aus dem wenigstens einen Strahlenbündel (4, 5) von der Belichtungsvorrichtung (1; 16) mehrere transparente Bereiche (7) aufweist, die jeweils einem der diskreten Elemente (15; 18) der Modulatorvorrichtung (9; 17) und/oder des Bildempfängers (14) zugeordnet sind, wobei der Querschnitt eines Teilbündels (8) auf dem Bildempfänger (14) durch die geometrische Ausdehnung des jeweiligen diskreten Elementes (15; 18), die geometrische Ausdehnung des jeweiligen transparenten Bereiches (7) und die Winkel (α, β) zwischen ihnen und dem Teilbündel (8) definiert ist, **dadurch gekennzeichnet, dass** die Ausbreitungsrichtung des von der Belichtungsvorrichtung (1; 16) erzeugten Strahlenbündels veränderbar ist, so dass die Winkel (α, β) zwischen dem jeweiligen diskreten Element (15; 18) bzw. dem jeweiligen transparenten Bereich (7) und dem Teilbündel (8) einstellbar sind und je nach Winkel (α, β) ein Teil des Teilbündels ausgeblendet wird.

2. Vorrichtung nach Anspruch 1, **dadurch gekennzeichnet, dass** die Belichtungsvorrichtung (1; 16) zum Erzeugen wenigstens eines Strahlenbündels (4, 5) wenigstens eine erste und eine zweite Lichtquelle (2, 3) umfasst, die unabhängig voneinander ansteuerbar sind, so dass das wenigstens eine Strahlenbündel (4, 5) unter einem ersten bzw. unter einem zweiten Winkel (γ, δ) aus der Belichtungsvorrichtung (1; 16) austritt.

3. Vorrichtung nach Anspruch 1, **dadurch gekennzeichnet, dass** die Belichtungsvorrichtung (1; 16) wenigstens eine Lichtquelle (16) umfasst, die verschiebbar ist, so dass das wenigstens eine Strahlenbündel unter einem veränderlichen Winkel aus der Belichtungsvorrichtung (1; 16) austritt.

4. Vorrichtung nach Anspruch 1, **dadurch gekennzeichnet, dass** die Belichtungsvorrichtung (1; 16) wenigstens eine Lichtquelle und ein im Strahlengang angeordnetes lichtbrechendes optisches Element (20) umfasst, das bewegbar ist, so dass das wenigstens eine Strahlenbündel (4, 5) unter einem veränderlichen Winkel (ϕ) aus der Belichtungsvorrichtung austritt.

5. Vorrichtung nach einem der vorangehenden Ansprüche, **dadurch gekennzeichnet, dass** die Modulatorvorrichtung (17) zwischen der Belichtungsvorrichtung (1; 16) und der Bildebene (13) angeordnet ist und eine vorgegebene Anzahl von diskreten, elektronisch ansteuerbaren Modulatorelementen (18) umfasst, wobei die geometrische Ausdehnung (d) jedes der Modulatorelemente (18) im wesentlichen dem Querschnitt jedes der Teilbündel (8) in Höhe der Modulatorvorrichtung (17) entspricht.

6. Vorrichtung nach Anspruch 5, **dadurch gekennzeichnet, dass** die elektronisch steuerbaren Modulatorelemente (18) Spiegel sind, deren Stellung in Bezug auf die Bildebene (13) veränderbar ist.

7. Vorrichtung nach Anspruch 5, **dadurch gekennzeichnet, dass** die elektronisch steuerbaren Modulatorelemente (18) LCD- Zellen sind, deren Transmissivität veränderbar ist.

8. Vorrichtung nach einem der vorangehenden Ansprüche, **dadurch gekennzeichnet, dass** der Bildempfänger (14) lichtempfindliche Flächen (15) aufweist, die matrixförmig in wenigstens einer Empfängerzeile angeordnet sind und die elektronisch ausgelesen werden, wobei die geometrische Ausdehnung (d) einer der Flächen (15) im wesentlichen dem Querschnitt des jeweiligen Teilbündels (8) in Höhe des Bildempfängers (14) entspricht.

9. Vorrichtung zum Erfassen eines hochaufgelösten Bildes in einer Bildebene (13) nach einem der Ansprüche 1 bis 7, **dadurch gekennzeichnet, dass** der Bildempfänger (14) eine photochemisch veränderbare Schicht ist.

10. Vorrichtung zum Erfassen eines hochaufgelösten Bildes in einer Bildebene (13) nach einem der vorangehenden Ansprüche, **dadurch gekennzeichnet, dass** wenigstens einige der transparenten Bereiche (7) der Blendenvorrichtung (6) als optische Linse wirken.

11. Verfahren zum Erfassen eines hochaufgelösten Bildes in einer Bildebene (13) mit den Schritten Erzeugen wenigstens eines Strahlenbündels durch eine Belichtungsvorrichtung (1; 16), partielles Modulieren der Intensität des Strahlenbündels von der Belichtungsvorrichtung (1; 16) durch eine Modulatorvorrichtung (17), wobei die Modulatorvorrichtung (17) zwischen der Belichtungsvorrichtung (1; 16) und der Bildebene (13) angeordnet ist, Aufnehmen des Bildes in der Bildebene (13) durch einen Bildempfänger (14), wobei die Modulatorvorrichtung (17) und/oder der Bildempfänger (14) eine vorgegebene Anzahl von diskreten Elementen (15; 18) aufweist, und Formen von Teilbündeln (8) aus dem wenigstens einen Strahlenbündel (4, 5) von der Belichtungsvorrichtung (1; 16) durch mehrere transparente Bereiche (7) einer opaken Blendenvorrichtung (6) zwischen der Belichtungsvorrichtung (1; 16) und der Bildebene (13), wobei jeder der mehreren transparenten Bereiche (7) jeweils einem der diskreten Elemente (15; 18) der Modulatorvorrichtung (17) und/oder des Bildempfängers (14) zugeordnet sind, wobei der Querschnitt eines Teilbündels (8) auf dem Bildempfänger (14) durch die geometrische Ausdehnung des jeweiligen diskreten Elementes (15; 18), die geometrische Ausdehnung des jeweiligen transparenten Bereiches (7) und den Winkel (α, β) zwischen ihnen und dem Teilbündel (8) definiert ist, **gekennzeichnet durch** Verändern der Ausbreitungsrichtung des von der Belichtungsvorrichtung (1; 16) erzeugten Strahlenbündels zum Einstellen der Winkel (α, β) zwischen dem jeweiligen diskreten Element (15; 18) bzw. dem jeweiligen transparenten Bereich (7) und dem Teilbündel (8), so dass ein Teil des Teilbündels (8) ausgeblendet wird, und Erfassen wenigstens eines ersten Teilbildes bei einem ersten Winkel (α) und eines zweiten Teilbildes bei einem zweiten Winkel (β) des jeweiligen Teilbündels auf der Bildebene (13).

12. Verfahren nach Anspruch 11, **dadurch gekennzeichnet, dass** wenigstens eine erste und eine zweite Lichtquelle (2, 3) der Belichtungsvorrichtung (1) zum Erzeugen wenigstens eines Strahlenbündels (4, 5) unabhängig voneinander angesteuert werden, so dass das wenigstens eine Strahlenbündel (4, 5) unter einem ersten bzw. unter einem zweiten Winkel (γ, δ)aus der Belichtungsvorrichtung (1; 16) austritt.

13. Verfahren nach Anspruch 11, **dadurch gekennzeichnet, dass** wenigstens eine Lichtquelle (2, 3) der Belichtungsvorrichtung (1) verschoben wird, so dass das wenigstens eine Strahlenbündel (4, 5) unter einem veränderlichen Winkel (ϕ) aus der Belichtungsvorrichtung (1) austritt.

14. Verfahren nach Anspruch 11, **dadurch gekennzeichnet, dass** ein im Strahlengang angeordnetes lichtbrechendes optisches Element (20) in der Belichtungsvorrichtung (1; 16) bewegt wird, so dass das wenigstens eine Strahlenbündel unter einem veränderlichen Winkel (ϕ) aus der Belichtungsvorrichtung (1; 16) austritt.
